# EUROPEAN PATENT SPECIFICATION

(11) **EP 4 542 582 B1**
(45) Date of publication and mention of the grant of the patent: **19.08.2026**
(21) Application number: 23823542.8
(22) Date of filing: 27.04.2023
(51) Int. Cl.: H01M 4/62, H01M 10/0562, H01B 1/06, H01M 10/0525

(54) **LITHIUM-ION BATTERY**
LITHIUMIONENBATTERIE
BATTERIE AU LITHIUM-ION

(30) Priority: 17.06.2022 JP 2022098341
(43) Date of publication of application: 23.04.2025
(73) Proprietor: Toyota Jidosha Kabushiki Kaisha, Toyota-shi, Aichi 471-8571 (JP)
(72) Inventor: MINAMI, Keiichi, Toyota-shi, Aichi 471-8571 (JP)
(74) Representative: D Young & Co LLP
(86) International application number: PCT/JP2023/016724
(87) International publication number: WO 2023/243239

(56) References cited:
- EP-A1- 3 965 199
- JP-A- 2020 092 100
- JP-A- 2021 072 259

## Description

### FIELD

The present disclosure relates to a lithium-ion conductor, a lithium-ion battery, and a method for the production of a lithium-ion conductor.

### BACKGROUND

Patent Literature 1 discloses a negative electrode layer of an all-solid-state lithium-ion battery, comprising particles of an alloy-based active material, wherein the particles of the alloy-based active material are twinned particles having two or more crystal orientations within one particle. In Patent Literature 1, by using twinned particles as particles of the alloy-based active material, stresses generated inside the negative electrode layer are released to the twinned particles, whereby cracks inside the negative electrode layer can be suppressed. Patent Literature 2 discloses a solid electrolyte constituting a solid electrolyte layer of an all-solid-state lithium-ion battery, comprising a lithium salt, a sulfide solid electrolyte, and an organic electrolyte having a predetermined elastic modulus ratio. The organic electrolyte disclosed in Patent Literature 2 has a property wherein the ratio of the storage elastic modulus to the loss elastic modulus decreases to less than 1 when heated. In Patent Literature 2, the solid electrolyte layer comprising a lithium salt, a sulfide solid electrolyte, and an organic electrolyte is heated, and as the temperature increases, the organic electrolyte changes from behaving as a solid to behaving as a liquid, whereby the organic electrolyte becomes compatible with the sulfide solid electrolyte, thereby improving ionic conductivity.

### [CITATION LIST]

### [PATENT LITERATURE]

[PTL 1] Japanese Unexamined Patent Publication No. 2020-092100
[PTL 2] Japanese Unexamined Patent Publication No. 2020-198270
[PTL 3] EP 3 965 199 A1
[PTL 4] Japanese Unexamined Patent Publication No. 2021-072259

### [TECHNICAL PROBLEM]

Even if the crystal orientation of the active material particles is adjusted, it is difficult to completely prevent cracks in the electrolyte layer and electrodes that occur during charging and discharging of a lithium-ion battery. Cracks in the electrolyte layer and electrodes of a lithium-ion battery may degrade the charge/discharge characteristics of the lithium-ion battery. There is needed a technology which can minimize deterioration of the charge/discharge characteristics of a lithium-ion battery when cracks occur in the electrolyte layer or electrodes.

### [SOLUTION TO PROBLEM]

The present invention presents the following aspects as means for achieving the above object.

### <Aspect 1>

A lithium-ion battery, comprising a positive electrode, an electrolyte layer, and a negative electrode, wherein at least one of the positive electrode, the electrolyte layer, and the negative electrode contains a lithium-ion conductor and a sulfide solid electrolyte, the lithium-ion conductor comprises a complex halide represented by LiGaX4, wherein X is halogens including Br and I and the pressure exerted on the lithium-ion conductor is 1 MPa or more and 100 MPa or less.

### <Aspect 2>

The lithium-ion battery according to Aspect 1, wherein the complex halide comprises a first complex halide represented by LiGaXa4, wherein Xa is one of Br and I and a second complex halide represented by LiGaXb4, wherein where Xb is a halogen different from Xa and is one of Br and I, and a molar ratio of the first complex halide to the second complex halide (first complex halide/second complex halide) is 1/4 or more and 4 or less.

### [EFFECTS OF INVENTION]

The lithium-ion conductor of the present disclosure is soft and has the property wherein the ion conductivity increases under pressure, and can cause a reaction similar to a sintering reaction even at a low temperature around room temperature. By including such a lithium-ion conductor in at least one of the electrodes and the electrolyte layer of a lithium-ion battery, even if a crack occurs in the electrodes or the electrolyte layer, the interface of the crack is repaired by the lithium-ion conductor, whereby the lithium-ion conduction path is unlikely to be interrupted. Specifically, a lithium-ion battery comprising the lithium-ion conductor of the present disclosure is likely to maintain its charge/discharge characteristics even if a crack occurs in the electrolyte layer or the electrodes.

### BRIEF DESCRIPTION OF DRAWINGS

FIG. 1 schematically shows the structure of a lithium-ion battery.
FIG. 2 shows the X-ray diffraction peaks of LiGaCl4.
FIG. 3 shows the time dependence of ionic conductivity of a pellet cell under pressure.

### DESCRIPTION OF EMBODIMENTS

### 1. Lithium-Ion Conductor

The lithium-ion conductor of the present invention as defined by the appended claims comprises a complex halide represented by LiGaX4, wherein X is halogens including Br and I.

### 1.1 Complex Halide Represented by LiGaX4

According to the new findings of the present inventors, the complex halide represented by LiGaX4 exhibits a "room temperature sintering mechanism" in which the interface resistance disappears or decreases even at room temperature under pressure, leading to a gradual improvement of ionic conductivity. When the lithium-ion conductor is applied to various electrochemical devices, the lithium-ion conductor can be in a state of being pressurized to a certain extent. Thus, the lithium-ion conductor of the present disclosure is likely to exhibit high ion conductivity in various electrochemical devices. Furthermore, since the complex halide is relatively soft, it can adapt to the deformation of the surrounding material. Specifically, voids caused by deformation or cracking of the material are filled by the lithium-ion conductor of the present disclosure, whereby the ion conduction path is unlikely to be interrupted.

Whether or not the lithium-ion conductor contains a complex halide represented by LiGaX4 can be confirmed by X-ray diffraction or the like. Specifically, when X-ray diffraction peaks are obtained from the lithium-ion conductor of the present disclosure using CuKα as a radiation source, the X-ray diffraction peaks include diffraction peaks derived from LiGaX4. As confirmed by the present inventors, though the diffraction peaks derived from LiGaX4 differ depending on the type of X, for example, the diffraction peaks derived from LiGaCl₄ appear at 15.3°±0.5°, 18.1°±0.5°, 18.7°±0.5°, 19.4°±0.5°, and 27.5°±0.5°.

In the complex halide represented by LiGaX₄, X is one or more halogens, and may be, for example, at least one selected from the group consisting of Cl, Br, and I. According to the new findings of the present inventors, when the complex halide has one or more of the following configurations (1) to (3), the rate of increase in ion conductivity when maintained under pressure tends to be particularly large, and the complex halide tends to be more preferable as a lithium-ion conductor:
(1) The complex halide described above contains a plurality of types of halogens.
(2) The complex halide described above contains at least one of Br and Cl.
(3) The complex halide described above contains Br and I.

According to the findings of the present inventors, when the complex halide contains Br as a halogen, by including at least one of Cl and I together with the Br, the increase rate of ionic conductivity when maintained under pressure is likely to be even greater. In this case, the molar ratio of Cl or I to Br is not particularly limited, and a high ionic conductivity can be secured regardless of the molar ratio. Furthermore, when the complex halide contains Cl and I as halogens, if the molar ratio of Cl to the sum of Cl and I is 50 mol% or more, the increase rate of ionic conductivity when maintained under pressure is likely to be particularly high.

In the lithium-ion conductor of the present disclosure, the complex halide described above may have a crystal structure consisting of a plurality of types of LiGaX4, or may have a eutectic structure consisting of a plurality of types of LiGaX4. Specifically, in the complex halide described above, a plurality of types of LiGaX₄ may be solid-solubilized or substituted with each other, resulting in structures and compositions different from those of each type when present alone. The complex halide described above may have a eutectic structure of LiGaBr4 and LiGaCl4, a eutectic structure of LiGaBr4 and LiGaI4, a eutectic structure of LiGaCl4 and LiGaI4, or a eutectic structure of LiGaBr4, LiGaCl4, and LiGaI4. The ratio of the plurality of types of LiGaX4 is not particularly limited. For example, when the complex halide described above comprises a first complex halide represented by LiGaXa4 (where Xa is one of Br, Cl, and I) and a second complex halide represented by LiGaXb4 (where Xb is a halogen different from Xa and is one of Br, Cl, and I), the molar ratio of the first complex halide to the second complex halide (first complex halide/second complex halide) may be 1/4 or more and 4 or less, 3/7 or more and 7/3 or less, or 2/3 or more and 3/2 or less.

### 1.2 Components Other than Complex Halide Represented by LiGaX₄

The lithium-ion conductor of the present disclosure may contain other halides in addition to the complex halide represented by LiGaX4. For example, it may contain LiX, GaX2, GaX3, LiGaX₃, etc. Specifically, the lithium-ion conductor of the present disclosure need not necessarily contain Li, Ga, and X at a molar ratio of 1:1:4 as the overall chemical composition thereof. Furthermore, the complex halide constituting the lithium-ion conductor of the present disclosure is also considered to be capable of being co-crystallized with other lithium compounds, and in that case, it is considered to exhibit the same effect. For example, at least one inorganic lithium compound selected from B-based lithium salts; Al-based lithium salts; In-based lithium salts; other halogen-based lithium salts such as LiPF₆ and LiBF₄; hydride-based lithium salts such as LiBH4 and LiCBH; lithium sulfides such as Li3PS4 and LPSI; lithium oxides such as LLZO, LPO, and LLTO; and other inorganic lithium compounds such as nitrates, hydroxides, sulfates, and carbonates can be co-crystallized with the complex halide described above, whereby it is believed possible to soften the inorganic lithium compound and improve the lithium-ion conductivity under pressure. Alternatively, it is possible to combine the complex halide with an organic lithium salt such as an amide salt or an imide salt, such as LiTFSA (LiTFSI, lithium bistrifluoromethanesulfonylimide), LiBETI (lithium bispentafluoroethanesulfonylimide), LiFSA (LiFSI, lithium bisfluorosulfonylimide), or LiFTA (LiFTI, lithium fluorosulfonyl(trifluoromethanesulfonyl)imide). The lithium-ion conductor of the present disclosure may be composed only of the complex halide described above or may be a combination of the complex halide described above with other lithium compounds in this manner.

The lithium-ion conductor of the present disclosure may be a combination of the complex halide described above and a solid electrolyte. For example, any solid electrolyte which is used as the solid electrolyte for batteries may be adopted as the solid electrolyte. The solid electrolyte may be a sulfide solid electrolyte containing at least Li and S as constituent elements. In particular, a sulfide solid electrolyte containing at least Li, S, and P as constituent elements has high performance, and a sulfide solid electrolyte based on a Li3PS4 skeleton and containing at least one type of halogen is also high in performance. Examples of sulfide solid electrolytes include Li₂S-P₂S₅, Li2S-SiS2, LiI-Li2S-SiS2, LiI-Si2S-P2S5, Li₂S-P₂S₅-LiI-LiBr, LiI-Li2S-P2S5, LiI-Li₂S-P₂O₅, LiI-Li₃PO₄-P₂S₅, and Li2S-P2S5-GeS2. The sulfide solid electrolyte may be amorphous or crystalline. The sulfide solid electrolyte may be, for example, in the form of particles. One type of sulfide solid electrolyte may be used alone, or two or more types thereof may be used in combination.

When the lithium-ion conductor of the present disclosure contains a sulfide solid electrolyte together with the complex halide described above, the mass ratio of the sulfide solid electrolyte to the complex halide is not particularly limited. For example, when the total of the sulfide solid electrolyte and the complex halide is 100% by mass, the ratio of the sulfide solid electrolyte may be 40% by mass or more and less than 100% by mass, 50% by mass or more and less than 100% by mass, 60% by mass or more and less than 100% by mass, 70% by mass or more and less than 100% by mass, or 80% by mass or more and less than 100% by mass, and the ratio of the complex halide may be greater than 0% by mass and 60% by mass or less, greater than 0% by mass and 50% by mass or less, greater than 0% by mass and 40% by mass or less, greater than 0% by mass and 30% by mass or less, or greater than 0% by mass and 20% by mass or less.

When the lithium-ion conductor of the present disclosure is used as an electrochemical device material, the complex halide described above, an arbitrary solid electrolyte, and other components may be combined. The other components can be appropriately determined in accordance with the specific use of the lithium-ion conductor. For example, when the lithium-ion conductor is used as an electrode material of a lithium-ion battery, the lithium-ion conductor may be combined with an active material, a conductive aid, a binder, etc. When the lithium-ion conductor is used as a material constituting an electrolyte layer of a lithium-ion battery, the lithium-ion conductor may be combined with a binder or the like. The lithium-ion conductor may contain the complex halide described above, an arbitrary solid electrolyte, and another electrolyte (a solid electrolyte other than the sulfide solid electrolyte or a liquid electrolyte). Furthermore, the lithium-ion conductor of the present disclosure may contain various additives.

### 2. Lithium-Ion Battery

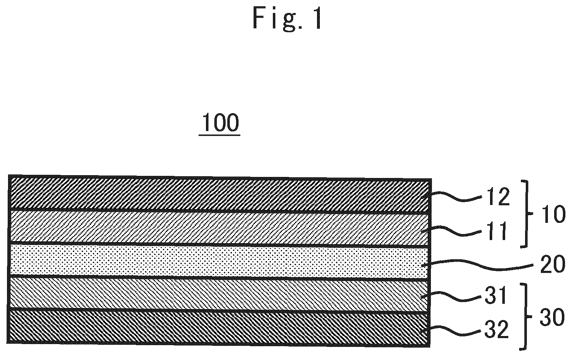

The lithium-ion conductor of the present disclosure can be applied as, for example, a lithium-ion conductive material in a lithium-ion battery. As shown in FIG. 1, a lithium-ion battery 100 according to an embodiment comprises a positive electrode 10, an electrolyte layer 20, and a negative electrode 30. At least one of the positive electrode 10, the electrolyte layer 20, and the negative electrode 30 contains the lithium-ion conductor of the present disclosure. As described above, the complex halide constituting the lithium-ion conductor of the present disclosure is soft, and the ion conductivity thereof gradually improves when a pressurized state is maintained. Thus, for example, during production of a battery, the complex halide is deformed and fills the voids in the electrodes and the electrolyte layer, whereby the filling rate of the electrodes and the electrolyte layer is easily increased. Furthermore, even if cracking or peeling occurs in the electrodes or electrolyte layer during use of the battery, since the complex halide fills the cracked or peeled portion, the voids caused by the cracking or peeling can be eliminated, whereby the ion conduction path is less likely to be interrupted. The lithium-ion conductor of the present disclosure is likely to be in a state of being pressurized inside the lithium-ion battery, and is likely to exhibit excellent lithium-ion conductivity. Furthermore, by using the lithium-ion conductor of the present disclosure in combination in a lithium-ion battery using lithium metal, it is expected that the generation of dendrites can be suppressed. By including the lithium-ion conductor of the present disclosure in at least one of the positive electrode 10, the electrolyte layer 20, and the negative electrode 30 of the lithium-ion battery 100 in this manner, the lithium-ion battery 100 is likely to have improved performance.

In the lithium-ion battery 100, a solid electrolyte and/or an electrolyte other than the solid electrolyte including a liquid electrolyte or a liquid additive may be used in combination with the lithium-ion conductor of the present disclosure. The lithium-ion battery 100 may be, for example, an all-solid-state battery which does not contain liquids, or may contain a solid electrolyte and a liquid. In particular, in the lithium-ion battery 100, when at least one of the positive electrode 10, the electrolyte layer 20, and the negative electrode 30 contains the lithium-ion conductor of the present disclosure and a solid electrolyte (in particular, a sulfide solid electrolyte), the lithium-ion conductor of the present disclosure can adapt to deformation or cracking of the solid electrolyte, whereby even if voids occur due to deformation or cracking of the sulfide solid electrolyte, the lithium-ion conductor of the present disclosure fills the voids, thereby potentially preventing interruption of the ion conduction path.

### 2.1 Positive Electrode

As shown in FIG. 1, the positive electrode 10 according to an embodiment may comprise a positive electrode active material layer 11 and a positive electrode current collector 12, and in this case, the positive electrode active material layer 11 can comprise the lithium-ion conductor described above.

### 2.1.1 Positive Electrode Active Material Layer

The positive electrode active material layer 11 contains a positive electrode active material, and may further contain an electrolyte, a conductive aid, a binder, etc., as desired. Furthermore, the positive electrode active material layer 11 may further contain various additives. When the positive electrode active material layer 11 contains the lithium-ion conductor of the present disclosure as an electrolyte, the positive electrode active material layer 11 contains a positive electrode active material in addition to the lithium-ion conductor, and can further contain another electrolyte, a conductive aid, a binder, and various additives as desired. The content of each of the positive electrode active material, electrolyte, conductive aid, binder, etc., in the positive electrode active material layer 11 may be appropriately determined in accordance with the desired battery performance. For example, the content of the positive electrode active material may be 40% by mass or more, 50% by mass or more, or 60% by mass or more, and may be less than 100% by mass or 90% by mass or less, when the entire positive electrode active material layer 11 (total solid content) is 100% by mass. The shape of the positive electrode active material layer 11 is not particularly limited, and may be, for example, a sheet having a substantially flat surface. The thickness of the positive electrode active material layer 11 is not particularly limited, and may be, for example, 0.1 µm or more, 1 µm or more, 10 µm or more, or 30 µm or more, and may be 2 mm or less, 1 mm or less, 500 µm or less, or 100 µm or less.

As the positive electrode active material, a positive electrode active material which is known for lithium-ion batteries may be used. Among known active materials, a material which exhibits a potential (charge/discharge potential) for absorbing and releasing lithium ions which is higher than that of the negative electrode active material described below can be used as the positive electrode active material. As the positive electrode active material, various lithium-containing composite oxides such as lithium cobalt oxide, lithium nickel oxide, lithium manganate, lithium manganese nickel cobalt oxide, and spinel-based lithium compounds may be used, or oxide-based active materials other than lithium-containing composite oxides may be used, or sulfur-based active materials such as elemental sulfur and sulfur compounds may be used. One type of positive electrode active material may be used alone, or two or more types thereof may be used in combination. The positive electrode active material may be, for example, particulate, and the size thereof is not particularly limited. The particles of the positive electrode active material may be solid particles, hollow particles, or particles having voids. The particles of the positive electrode active material may be primary particles, or secondary particles formed by agglomeration of a plurality of primary particles. The average particle diameter (D50) of the particles of the positive electrode active material may be, for example, 1 nm or more, 5 nm or more, or 10 nm or more, and may be 500 µm or less, 100 µm or less, 50 µm or less, or 30 µm or less. The average particle diameter D50 as used herein is the particle diameter (median diameter) at an integrated value of 50% in a volume-based particle size distribution obtained by the laser diffraction/scattering method.

The surface of the positive electrode active material may be covered with a protective layer containing an ion-conductive oxide. Specifically, the positive electrode active material layer 11 may contain a composite having the positive electrode active material described above and a protective layer provided on the surface thereof. As a result, it is easier to suppress a reaction between the positive electrode active material and a sulfide (for example, the sulfide solid electrolyte or the like described above). When the battery is a lithium-ion battery, examples of the ion conductive oxide for covering and protecting the surface of the positive electrode active material include Li₃BO₃, LiBO₂, Li₂CO₃, LiAlO₂, Li₄SiO₄, Li₂SiO₃, Li₃PO₄, Li₂SO₄, Li2TiO3, Li₄Ti₅O₁₂, Li₂Ti₂O₅, Li₂ZrO₃, LiNbO₃, Li₂MoO₄, and Li₂WO₄. The coverage (area ratio) of the protective layer may be, for example, 70% or more, 80% or more, or 90% or more. The thickness of the protective layer may be, for example, 0.1 nm or more or 1 nm or more, and may be 100 nm or less or 20 nm or less.

The electrolyte which can be included in the positive electrode active material layer 11 may be a solid electrolyte, a liquid electrolyte (electrolytic solution), or a combination thereof.

The solid electrolyte may be any solid electrolyte which is known for lithium-ion batteries. The solid electrolyte may be an inorganic solid electrolyte or an organic polymer electrolyte. In particular, inorganic solid electrolytes have excellent ion conductivity and heat resistance. In addition to the sulfide solid electrolyte described above, examples of the inorganic solid electrolyte include oxide solid electrolytes such as lithium lanthanum zirconate, LiPON, Li_{1+X}Al_{X}Ge_{2-X}(PO₄)₃, Li-SiO-based glasses, and Li-Al-S-O-based glasses. In particular, the performance of sulfide solid electrolytes, and in particular, sulfide solid electrolytes containing at least Li, S, and P as constituent elements, is high. When the positive electrode active material layer 11 contains a solid electrolyte (and in particular, a sulfide solid electrolyte) together with the lithium-ion conductor of the present disclosure, it is expected that the effect of repairing cracks in the solid electrolyte with the lithium-ion conductor of the present disclosure can be exhibited. The solid electrolyte may be amorphous or crystalline. The solid electrolyte may be, for example, particulate. One type of solid electrolyte may be used alone, or two or more types thereof may be used in combination.

The electrolytic solution can contain, for example, lithium ions as carrier ions. The electrolytic solution may be, for example, a non-aqueous electrolytic solution. For example, the electrolytic solution may be a carbonate-based solvent in which a lithium salt is dissolved at a predetermined concentration. Examples of carbonate-based solvents include fluoroethylene carbonate (FEC), ethylene carbonate (EC), and dimethyl carbonate (DMC). Examples of lithium salts include hexafluorophosphate.

Examples of the conductive aid which can be included in the positive electrode active material layer 11 include carbon materials such as vapor grown carbon fiber (VGCF), acetylene black (AB), Ketjen black (KB), carbon nanotubes (CNT), and carbon nanofibers (CNF); and metal materials such as nickel, aluminum, and stainless steel. The conductive aid may be, for example, particulate or fibrous, and the size thereof is not particularly limited. One type of conductive aid may be used alone, or two or more types thereof may be used in combination.

Examples of the binder which can be included in the positive electrode active material layer 11 include butadiene rubber (BR)-based binders, butylene rubber (IIR)-based binders, acrylate butadiene rubber (ABR)-based binders, styrene butadiene rubber (SBR)-based binders, polyvinylidene fluoride (PVdF)-based binders, polytetrafluoroethylene (PTFE)-based binders, polyimide (PI)-based binders, and polyacrylic acid-based binders. One type of binder may be used alone, or two or more types thereof may be used in combination.

### 2.1.2 Positive Electrode Current Collector

As shown in FIG. 1, the positive electrode 10 may comprise a positive electrode current collector 12 in contact with the positive electrode active material layer 11 described above. The positive electrode current collector 12 may be any current collector which is commonly used as a positive electrode current collector for batteries. The positive electrode current collector 12 may be in the form of a foil, a plate, a mesh, a punched metal, or a foam. The positive electrode current collector 12 may be composed of a metal foil or a metal mesh. In particular, metal foils are excellent in terms of ease of handling. The positive electrode current collector 12 may be composed of a plurality of foils. Examples of metals constituting the positive electrode current collector 12 include Cu, Ni, Cr, Au, Pt, Ag, Al, Fe, Ti, Zn, Co, and stainless steel. In particular, the positive electrode current collector 12 may contain Al from the viewpoint of ensuring oxidation resistance. The positive electrode current collector 12 may have some type of coating layer on the surface thereof for the purpose of adjusting resistance. The positive electrode current collector 12 may be a metal foil or a substrate on which the metal described above is plated or vapor-deposited. When the positive electrode current collector 12 is composed of a plurality of metal foils, some layer may be present between the plurality of metal foils. The thickness of the positive electrode current collector 12 is not particularly limited. For example, it may be 0.1 µm or more or 1 µm or more, and may be 1 mm or less or 100 µm or less.

In addition to the above configuration, the positive electrode 10 may have general components as a positive electrode of a lithium-ion battery. For example, tabs or terminals. The positive electrode 10 can be produced by adopting a known method. For example, the positive electrode active material layer 11 can be easily formed by dry or wet molding a positive electrode mixture containing the various components described above. The positive electrode active material layer 11 may be molded together with the positive electrode current collector 12 or may be molded separately from the positive electrode current collector 12.

### 2.2 Electrolyte Layer

The electrolyte layer 20 contains at least an electrolyte. The electrolyte layer 20 may contain a solid electrolyte, and may further contain a binder or the like. When the electrolyte layer 20 contains the lithium-ion conductor of the present disclosure as an electrolyte, the electrolyte layer 20 may further contain another electrolyte, a binder, and various additives in addition to the lithium-ion conductor. In this case, the content of the electrolyte and binder or the like in the electrolyte layer 20 is not particularly limited. Alternatively, the electrolyte layer 20 may contain an electrolytic solution, and may further contain a separator or the like for retaining the electrolytic solution and preventing contact between the positive electrode active material layer 11 and the negative electrode active material layer 31. The thickness of the electrolyte layer 20 is not particularly limited, and may be, for example, 0.1 µm or more or 1 µm or more, and may be 2 mm or less or 1 mm or less.

The electrolyte contained in the electrolyte layer 20 may be appropriately selected from the electrolytes exemplified as electrolytes which can be included in the lithium-ion conductor of the present disclosure and the positive electrode active material layer. For example, when the electrolyte layer 20 contains a solid electrolyte (and in particular, a sulfide solid electrolyte) together with the lithium-ion conductor of the present disclosure, it is expected that the effect of repairing cracks in the solid electrolyte by the lithium-ion conductor of the present disclosure can be exhibited. The binder which can be contained in the electrolyte layer 20 may also be appropriately selected from the binders exemplified as binders which can be contained in the positive electrode active material layer. One type of electrolyte or binder may be used alone, or two or more types thereof may be used in combination. When the lithium-ion battery is a liquid electrolyte battery, the separator for retaining the electrolytic solution may be any separator which is commonly used in lithium-ion batteries, and examples of the separator include separators composed of a polyethylene (PE), polypropylene (PP), polyester, or polyamide resin. The separator may have a single layer structure or a multilayer structure. Examples of separators having a multilayer structure include a separator having a PE/PP two-layer structure, or a separator having a PP/PE/PP or PE/PP/PE three-layer structure. The separator may be composed of a nonwoven fabric such as a cellulose nonwoven fabric, a resin nonwoven fabric, or a glass fiber nonwoven fabric.

### 2.3 Negative Electrode

As shown in FIG. 1, the negative electrode 30 according to an embodiment may comprise a negative electrode active material layer 31 and a negative electrode current collector 32, and in this case, the negative electrode active material layer 31 can contain the lithium-ion conductor described above.

### 2.3.1 Negative Electrode Active Material Layer

The negative electrode active material layer 31 contains a negative electrode active material, and may further contain an electrolyte, a conductive aid, a binder, and the like. Furthermore, the negative electrode active material layer 31 may contain various other additives. When the negative electrode active material layer 31 contains the lithium-ion conductor of the present disclosure as an electrolyte, the negative electrode active material layer 31 contains a negative electrode active material in addition to the lithium-ion conductor, and can further contain another electrolyte, a conductive aid, a binder, and various additives. The content of each of the negative electrode active material, electrolyte, conductive aid, binder, etc., in the negative electrode active material layer 31 may be appropriately determined in accordance with the desired battery performance. For example, the content of the negative electrode active material may be 40% by mass or more, 50% by mass or more, or 60% by mass or more, and may be less than 100% by mass or 90% by mass or less, when the entire negative electrode active material layer 31 (total solid content) is 100% by mass. The shape of the negative electrode active material layer 31 is not particularly limited, and may be, for example, a sheet having a substantially flat surface. The thickness of the negative electrode active material layer 31 is not particularly limited, and may be, for example, 0.1 µm or more, 1 µm or more, 10 µm or more, or 30 µm or more, and may be 2 mm or less, 1 mm or less, 500 µm or less, or 100 µm or less.

As the negative electrode active material, various materials having a potential (charge/discharge potential) for absorbing and releasing the predetermined ions lower than that of the positive electrode active material can be used. For example, silicon-based active materials such as Si, Si alloys, and silicon oxide; carbon-based active materials such as graphite and hard carbon; various oxide-based active materials such as lithium titanate; metallic lithium and lithium alloys can be used. One type of negative electrode active material may be used alone, or two or more types thereof may be used in combination. The shape of the negative electrode active material may be a general shape as a negative electrode active material for a lithium-ion battery. For example, the negative electrode active material may be in particulate form. The negative electrode active material particles may be primary particles, or may be secondary particles in which a plurality of primary particles are aggregated. The average particle diameter (D50) of the negative electrode active material particles may be, for example, 1 nm or more, 5 nm or more, or 10 nm or more, and may be 500 µm or less, 100 µm or less, 50 µm or less, or 30 µm or less. Alternatively, the negative electrode active material may be in the form of a sheet (foil or film) such as lithium foil, etc. Specifically, the negative electrode active material layer 31 may be composed of a sheet of negative electrode active material.

Examples of the electrolyte which can be included in the negative electrode active material layer 31 include the lithium-ion conductor of the present disclosure and the solid electrolytes and electrolytic solutions described above, or combinations thereof. For example, when the negative electrode active material layer 31 contains a solid electrolyte (and in particular, a sulfide solid electrolyte) together with the lithium-ion conductor of the present disclosure, it is expected that the effect of repairing cracks in the solid electrolyte is exhibited by the lithium-ion conductor of the present disclosure. Examples of the conductive aid which can be included in the negative electrode active material layer 31 include the carbon materials and the metal materials described above. The binder which can be included in the negative electrode active material layer 31 may be appropriately selected from, for example, the binders exemplified as those which can be included in the positive electrode active material layer 11. One type of electrolyte or binder may be used alone, or two or more types thereof may be used in combination.

### 2.3.2 Negative Electrode Current Collector

As shown in FIG. 1, the negative electrode 30 may comprise a negative electrode current collector 32 in contact with the negative electrode active material layer 31. The negative electrode current collector 32 may be any current collector which is commonly used as the negative electrode current collector for batteries. The negative electrode current collector 32 may be in the form of a foil, a plate, a mesh, a punched metal, or a foam. The negative electrode current collector 32 may be a metal foil or a metal mesh, or may be a carbon sheet. In particular, metal foils are excellent in terms of ease of handling. The negative electrode current collector 32 may be composed of a plurality of foils or sheets. Examples of the metal constituting the negative electrode current collector 32 include Cu, Ni, Cr, Au, Pt, Ag, Al, Fe, Ti, Zn, Co, and stainless steel. In particular, from the viewpoint of ensuring reduction resistance and resistance to alloying with lithium, the negative electrode current collector 32 may contain at least one metal selected from Cu, Ni, and stainless steel. The negative electrode current collector 32 may have some type of coating layer on the surface thereof for the purpose of adjusting the resistance. Furthermore, the negative electrode current collector 32 may be a metal foil or a substrate on which the metal described above is plated or vapor-deposited. When the negative electrode current collector 32 is composed of a plurality of metal foils, some type of layer may be present between the plurality of metal foils. The thickness of the negative electrode current collector 32 is not particularly limited. For example, it may be 0.1 µm or more or 1 µm or more, and may be 1 mm or less or 100 µm or less.

In addition to the above configuration, the negative electrode 30 may have general components as a negative electrode of a lithium-ion battery. For example, tabs or terminals. The negative electrode 30 can be produced by adopting a known method. For example, the negative electrode active material layer 31 can be easily formed by dry or wet molding of a negative electrode mixture containing the various components described above. The negative electrode active material layer 31 may be molded together with the negative electrode current collector 32 or may be molded separately from the negative electrode current collector 32.

### 2.4 Other Matters

The lithium-ion battery 100 may comprise each of the components described above housed inside an exterior body. Any known exterior body for a battery may be used as the exterior body. Furthermore, a plurality of lithium-ion batteries 100 may be electrically connected in any manner and stacked in any manner to form an assembled battery. In this case, the assembled battery may be housed inside a known battery case. The lithium-ion battery 100 may also comprise other obvious components such as necessary terminals. Examples of the shape of the lithium-ion battery 100 include a coin type, a laminate type, a cylindrical type, and a rectangular type.

The lithium-ion battery 100 can be produced by applying a known method. For example, it can be produced as follows. However, the production method of the lithium-ion battery 100 is not limited to the following method, and each layer may be formed by, for example, dry molding.
(1) The positive electrode active material constituting the positive electrode active material layer is dispersed in a solvent to obtain a positive electrode layer slurry. The solvent used in this case is not particularly limited, and water or any of various organic solvents can be used. The positive electrode layer slurry is applied to the surface of a positive electrode current collector using a doctor blade or the like, and then dried to form a positive electrode active material layer on the surface of the positive electrode current collector, whereby a positive electrode is obtained.
(2) The negative electrode active material constituting the negative electrode active material layer is dispersed in a solvent to obtain a negative electrode layer slurry. The solvent used in this case is not particularly limited, and water or any of various organic solvents can be used. The negative electrode layer slurry is applied to the surface of a negative electrode current collector using a doctor blade or the like, and then dried to form a negative electrode active material layer on the surface of the negative electrode current collector, whereby a negative electrode is obtained.
(3) The layers are laminated so that an electrolyte layer (solid electrolyte layer or separator) is interposed between the negative electrode and the positive electrode to obtain a laminate comprising, in this order, a negative electrode current collector, a negative electrode active material layer, an electrolyte layer, a positive electrode active material layer, and a positive electrode current collector. Other components such as terminals are attached to the laminate as needed.
(4) The laminate is housed in a battery case, and in the case of a liquid electrolyte battery, the battery case is filled with an electrolytic solution, and the laminate is immersed in the electrolytic solution and sealed in the battery case to form a lithium-ion battery. In the case of a battery containing an electrolytic solution, the negative electrode active material layer, the separator, and the positive electrode active material layer may be impregnated with the electrolytic solution in stage (3) described above.

### 3. Method for Production of Lithium-Ion Conductor

The lithium-ion conductor of the present disclosure can be produced by, for example, mixing a lithium halide and a gallium halide. Specifically, the method for the production of the lithium-ion conductor of the present disclosure may comprise mixing at least one lithium halide and at least one gallium halide to obtain a complex halide represented by LiGaX₄ (where X is one or more halogens).

### 3.1 Lithium Halide

Examples of lithium halides include lithium chloride, lithium bromide, lithium iodide, and combinations thereof. The lithium halide may be in any form which can be mixed with the gallium halide, for example, in particulate form.

### 3.2 Gallium Halide

Examples of gallium halides include gallium chloride, gallium bromide, gallium iodide, and combinations thereof. The gallium halide may be in any form which can be mixed with the lithium halide, for example, in particulate form. Though the valence of gallium in the gallium halide may be divalent or trivalent, high ionic conductivity is easily secured when it is trivalent. Specifically, GaX3 (where X is one or more halogens) is preferably used as the gallium halide.

### 3.3 Mixing Ratio

The mixing ratio of the lithium halide and the gallium halide may be such that LiGaX4 is generated in the lithium-ion conductor after mixing. For example, the molar ratio (Li/Ga) of lithium in the lithium halide and gallium in the gallium halide may be 0.6 or more and 1.5 or less. The molar ratio may be 0.7 or more, 0.8 or more, or 0.9 or more, and may be 1.4 or less, 1.3 or less, 1.2 or less, or 1.1 or less.

### 3.4 Mixing Means

The complex halide constituting the lithium-ion conductor of the present disclosure can be produced by, for example, mixing the lithium halide and gallium halide described above while applying stress thereto. The stress may be, for example, frictional force, shear force, sliding stress, impact force, or the like. Examples of the method for applying such stress during mixing include a method of mixing while grinding the materials using a mechanical mixing means such as a ball mill.

### 4. Method for Use of Lithium-Ion Conductor

The technology of the present disclosure also includes an aspect of a method for the use of a lithium-ion conductor. Specifically, the method for the use of a lithium-ion conductor of the present disclosure is characterized in that the lithium-ion conductor of the present disclosure is used in an electrochemical device while being pressurized. For example, the lithium-ion conductor of the present disclosure is used in a pressurized state in at least one of the positive electrode, the electrolyte layer, and the negative electrode of a lithium-ion battery. The magnitude of the pressure exerted on the lithium-ion conductor is not particularly limited. For example, when the lithium-ion conductor is included in a pressurized state in at least one of the positive electrode, the electrolyte layer, and the negative electrode of a lithium-ion battery, the pressure exerted on the lithium-ion conductor may be 0.1 MPa or more and 100 MPa or less, 1 MPa or more and 50 MPa or less, or 5 MPa or more or 30 MPa or less.

### 5. Method for Charging/Discharging of Lithium-Ion Battery, and Method for Improving Cycle Characteristics of Lithium-Ion Battery

When the lithium-ion conductor of the present disclosure is included in at least one of the positive electrode, the electrolyte layer, and the negative electrode of a lithium-ion battery, the charge/discharge cycle characteristics of the lithium-ion battery can easily be improved. Specifically, the method for charging and discharging of a lithium-ion battery and the method of improving the cycle characteristics of a lithium-ion battery of the present disclosure include repeatedly charging and discharging the lithium-ion battery, wherein the lithium-ion battery comprises a positive electrode, an electrolyte layer, and a negative electrode, at least one of the positive electrode, the electrolyte layer, and the negative electrode contains the lithium-ion conductor of the present disclosure, and when voids occur in at least one of the positive electrode, the electrolyte layer, and the negative electrode due to charging and discharging of the lithium-ion battery, at least some of the voids are eliminated by the lithium-ion conductor of the present disclosure. As used herein, "voids" refers to any void which can occur in at least one of the positive electrode, the electrolyte layer, and the negative electrode due to a volumetric change of the active material. The term "voids" includes "cracks" and the like. It is believed that the ion conduction path or the conductive path interrupted by the voids can be repaired by eliminating at least some of the voids with the ion conductor of the present disclosure (i.e., by filling at least a part of the voids with the lithium-ion conductor of the present disclosure).

### 6. Vehicle Comprising Lithium-Ion Battery

When the lithium-ion conductor of the present disclosure is included in at least one of the positive electrode, the electrolyte layer, and the negative electrode of a lithium-ion battery as described above, the charge/discharge cycle characteristics of the lithium-ion battery can be expected to be improved. A lithium-ion battery having such excellent charge/discharge cycle characteristics can be suitably used in at least one vehicle selected from, for example, a hybrid vehicle (HEV), a plug-in hybrid vehicle (PHEV), and an electric vehicle (BEV). Specifically, the technology of the present disclosure also includes an aspect of a vehicle comprising a lithium-ion battery, wherein the lithium-ion battery comprises a positive electrode, an electrolyte layer, and a negative electrode, and at least one of the positive electrode, the electrolyte layer, and the negative electrode contains the lithium-ion conductor of the present disclosure.

### EXAMPLES

As described above, though embodiments of the lithium-ion conductor, lithium-ion battery, and method for the production of a lithium-ion conductor of the present disclosure have been described, the lithium-ion conductor, lithium-ion battery, and method for the production of a lithium-ion conductor of the present disclosure can be modified in various manners other than the embodiments described above without departing from the spirit of the present disclosure. The technology of the present disclosure will be described in more detail below while illustrating the Examples, but the technology of the present disclosure is not limited to the following Examples.

### 1. Synthesis of Complex Halide as Lithium-Ion Conductor

### 1.1 Example 1

LiCl (manufactured by Kojundo Chemical Lab Co., Ltd.) and GaCl₃ (manufactured by Tokyo Chemical Industry Co., Ltd.) were weighed so as to achieve a molar ratio of 50:50 and charged into a 500 ml ZrO2 pot. φ5 mm ZrO2 balls and 100 g of heptane (manufactured by Kanto Chemical Co., Inc.) were added to the pot, and grinding was carried out at 300 rpm for 1 hour. This was repeated 20 times. The mixture was then dried to obtain LiGaCl4.

### 1.2 Example 2

Mixing was carried out in the same manner as in Example 1, except that LiI (manufactured by Kojundo Chemical Lab Co., Ltd.) was used instead of the LiCl and GaI3 (manufactured by Aldrich Co., Ltd.) was used instead of the GaCl₃, whereby LiGaI₄ was obtained. LiGaCl₄ synthesized in the same manner as in Example 1 and the LiGaI₄ were mixed at a molar ratio of 80:20, heated, and stirred at a temperature above the melting points thereof to obtain a molten liquid. The obtained molten liquid was cooled to room temperature and then ground in a mortar to obtain a 80LiGaCl4-20LiGaI4 molten salt.

### 1.3 Example 3

A 50LiGaCL4-50LiGaI4 molten salt was obtained in the same manner as in Example 2, except that the LiGaCl4 and LiGaI₄ were mixed at a molar ratio of 50:50.

### 1.4 Example 4

Mixing was carried out in the same manner as in Example 1, except that LiBr (manufactured by Kojundo Chemical Lab Co., Ltd.) was used instead of the LiCl and GaBr₃ (manufactured by Alpha Co., Ltd.) was used instead of the GaCl₃, whereby LiGaBr4 was synthesized. LiGaCl4 synthesized in the same manner as in Example 1 and the LiGaBr4 were mixed at a molar ratio of 80:20, heated, and stirred at a temperature above the melting points thereof to obtain a molten liquid. The obtained molten liquid was cooled to room temperature and then ground in a mortar to obtain an 80LiGaCl4-20LiGaBr4 molten salt.

### 1.5 Example 5

A 50LiGaCl4-50LiGaBr4 molten salt was obtained in the same manner as in Example 4, except that the LiGaCl4 and LiGaBr4 were mixed at a molar ratio of 50:50.

### 1.6 Example 6

A 20LiGaCl₄-80LiGaBr₄ molten salt was obtained in the same manner as in Example 4, except that the LiGaCl4 and LiGaBr4 were mixed at a molar ratio of 20:80.

### 1.7 Example 7

Mixing was carried out in the same manner as in Example 1, except that LiBr (manufactured by Kojundo Chemical Lab Co., Ltd.) was used instead of the LiCl, and GaBr3 (manufactured by Alpha Co., Ltd.) was used instead of the GaCl₃, whereby LiGaBr₄ was obtained.

### 1.8 Example 8

LiGaBr₄ and LiGaI₄ were mixed at a molar ratio of 80:20, heated, and stirred at a temperature above the melting points thereof to obtain a molten liquid. The obtained molten liquid was cooled to room temperature and then ground in a mortar to obtain an 80LiGaBr4-20LiGaI₄ molten salt.

### 1.9 Example 9

LiGaBr₄ and LiGaI₄ were mixed at a molar ratio of 70:30, heated, and stirred at a temperature above the melting points thereof to obtain a molten liquid. The obtained molten liquid was cooled to room temperature and then ground in a mortar to obtain a 70LiGaBr4-30LiGaI4 molten salt.

### 1.10 Example 10

LiGaBr₄ and LiGaI₄ were mixed at a molar ratio of 60:40, heated, and stirred at a temperature above the melting points thereof to obtain a molten liquid. The obtained molten liquid was cooled to room temperature and then ground in a mortar to obtain a 60LiGaBr4-40LiGaI4 molten salt.

### 1.11 Example 11

LiGaBr₄ and LiGaI₄ were mixed at a molar ratio of 50:50, heated, and stirred at a temperature above the melting points thereof to obtain a molten liquid. The obtained molten liquid was cooled to room temperature and then ground in a mortar to obtain a 50LiGaBr4-50LiGaI4 molten salt.

### 1.12 Example 12

LiGaBr₄ and LiGaI₄ were mixed at a molar ratio of 40:60, heated, and stirred at a temperature above the melting points thereof to obtain a molten liquid. The obtained molten liquid was cooled to room temperature and then ground in a mortar to obtain a 40LiGaBr4-60LiGaI4 molten salt.

### 1.13 Example 13

LiGaBr₄ and LiGaI₄ were mixed at a molar ratio of 40:60, heated, and stirred at a temperature above the melting points thereof to obtain a molten liquid. The obtained molten liquid was cooled to room temperature and then ground in a mortar to obtain a 20LiGaBr4-80LiGaI4 molten salt.

### 1.14 Comparative Example 1

LiCl and AlCl₃ (Wako Pure Chemical Industries, Ltd.) were weighed so as to achieve a molar ratio of 50:50 and charged into a 500 ml ZrO2 pot. φ5 mm ZrO2 balls and 100 g of heptane (manufactured by Kanto Chemical Industries, Ltd.) were added to the pot, and grinding was carried out at 300 rpm for 1 hour. This was repeated 20 times. The mixture was dried to obtain LiAlCl₄.

### 1.15 Comparative Example 2

A Li-P-S-I-Br type sulfide solid electrolyte was prepared.

### 2. Confirmation of Crystal Structure

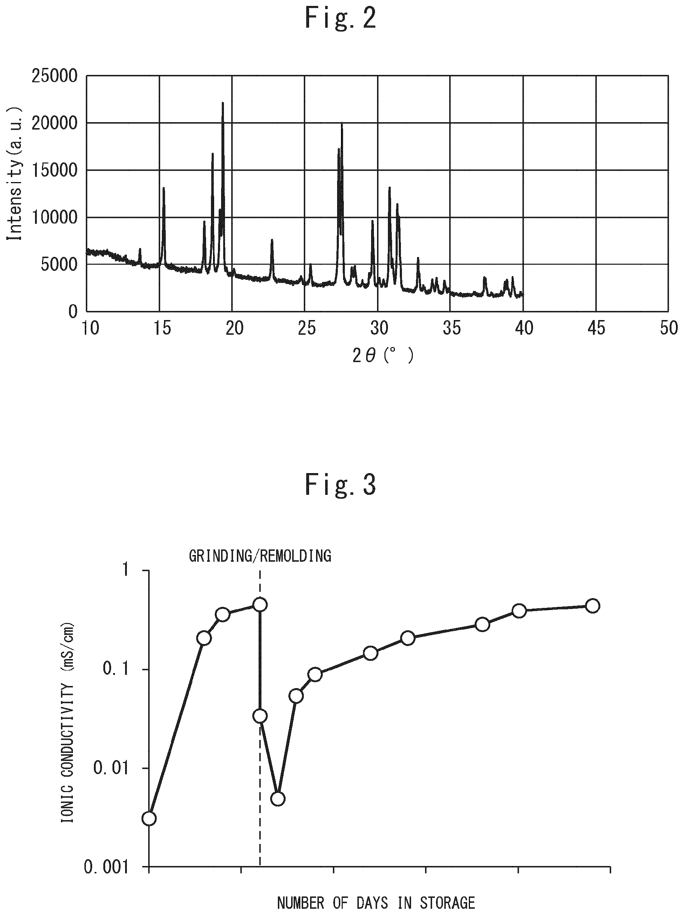

FIG. 2 shows the X-ray diffraction peaks of the LiGaCl4 of Example 1. As is clear from FIG. 2, in the X-ray diffraction peaks of the LiGaCl4 obtained after mixing by ball milling, it can be understood that the peaks derived from the raw materials LiCl and GaCl₃ are not substantially confirmed (or the peaks are reduced as compared to the raw materials) and a crystal phase different from LiCl and GaCl₃ is generated, and specifically, a crystal phase according to LiGaCl₄ is generated. Likewise, for Example 7, a crystal phase according to LiGaBr₄ was confirmed, and for Examples 2 to 6 and Examples 8 to 13, it was confirmed that they have a eutectic structure of each complex halide.

### 3. Measurement of Ionic Conductivity

The ionic conductivity of each of the lithium-ion conductors of Examples 1 to 13 and Comparative Examples 1 and 2 was measured. Specifically, 150 mg of the ionic conductor was charged into a cylinder and pressed uniaxially to produce a pellet cell. This was placed in a desiccator and impedance measurements were performed at 25°C in a thermostatic chamber. The ionic conductivity after pressing was calculated from the obtained resistance value and sample thickness. This pellet cell was allowed to stand in the thermostatic chamber for a certain period of time, the resistance value was read at the point when the resistance reduction was saturated, and the ionic conductivity after storage was calculated.

### 4. Preparation and Evaluation of Batteries for Evaluation

### 4.1 Applied Example 1

### 4.1.1 Preparation of Negative Electrode Mixture

The sulfide solid electrolyte of Comparative Example 2 and the molten salt of Example 2 were weighed so as to achieve a volume ratio of 80:20, whereby a mixed electrolyte was obtained. Crystalline Si as a negative electrode active material, the mixed electrolyte, and VGCF as a conductive aid were mixed in a mortar to obtain a negative electrode mixture.

### 4.1.2 Preparation of Positive Electrode Mixture

NCM (LiNi_{1/3}Col/₃Mn_{1/3}O₂) coated with LiNbO3 as a positive electrode active material, the sulfide solid electrolyte of Comparative Example 2, and VGCF as a conductive aid were mixed in a mortar to obtain a positive electrode mixture.

### 4.1.3 Cell Preparation

The positive electrode mixture, the sulfide solid electrolyte of Comparative Example 2, and the negative electrode mixture were layered in an alumina cylinder having a diameter of 11.28 mm, and then pressing with a 6-ton press was carried out to obtain a laminate composed of a positive electrode mixture layer/sulfide solid electrolyte layer/negative electrode mixture layer. The laminate was restrained with a force of 6 N to prepare an all-solid-state battery for evaluation.

### 4.1.4 Charge/Discharge Cycle Test

The produced all-solid-state battery was subjected to 50 cycles of CCCV charge/discharge at a charge/discharge rate of 1/3 C at room temperature, and the ratio of the capacity after 50 cycles to the initial capacity was calculated as the "capacity retention rate."

### 4.2 Applied Comparative Example 1

An all-solid-state battery was produced in the same manner as in Applied Example 1, except that in the negative electrode mixture, the LiAlCl₄ of Comparative Example 1 was used instead of the molten salt of Example 2, and a charge/discharge cycle test was carried out.

### 4.3 Applied Comparative Example 2

An all-solid-state battery was produced in the same manner as in Applied Example 1, except that in the negative electrode mixture, only the sulfide solid electrolyte of Comparative Example 2 was used as the electrolyte, and a charge/discharge cycle test was carried out.

### 5. Evaluation Results

The type and ionic conductivity of the lithium-ion conductor of each of Examples 1 to 13 and Comparative Examples 1 and 2 are shown in Table 1 below. The measurement results of the capacity retention rate of each of the all-solid-state batteries of Applied Example 1 and Applied Comparative Examples 1 and 2 are shown in Table 2 below. Furthermore, FIG. 3 shows the time dependence of the ionic conductivity for the pellet cell of Example 2.

**[Table 1]**

| | Type | Room temp conductivity (immediately after pressing) [mS/cm] | Room temp conductivity (after storage) [mS/cm] | Conductivity increase [fold] |
|---|---|---|---|---|
| Ex 1 | LiGaCl₄ | 0.0047 | 0.62 | 132 |
| Ex 2 | 80LiGaCl₄-20LiGaI₄ | 0.0011 | 0.69 | 615 |
| Ex 3 | 50LiGaCl₄-50LiGaI₄ | 0.00067 | 0.084 | 125 |
| Ex 4 | 80LiGaCl₄-20LiGaBr4 | 0.034 | 0.064 | 1.9 |
| Ex 5 | 50LiGaCl4-50LiGaBr4 | 0.024 | 0.099 | 4.1 |
| Ex 6 | 20LiGaCl₄-80LiGaBr4 | 0.084 | 0.18 | 2.1 |
| Ex 7 | LiGaBr4 | 0.0087 | 0.50 | 58 |
| Ex 8 | 80LiGaBr4-20LiGaI₄ | 0.00089 | 1.55 | 1746 |
| Ex 9 | 70LiGaBr4-30LiGaI4 | 0.00089 | 1.72 | 1931 |
| Ex 10 | 60LiGaBr4-40LiGaI₄ | 0.00032 | 1.87 | 5927 |
| Ex 11 | 50LiGaBr4-50LiGaI4 | 0.00055 | 1.75 | 3170 |
| Ex 12 | 40LiGaBr4-60LiGaI₄ | 0.00025 | 4.84 | 19023 |
| Ex 13 | 20LiGaBr4-80LiGaI4 | 0.00023 | 0.12 | 516 |
| Comp Ex 1 | LiAlCl4 | 0.00013 | 0.000060 | 0.5 |
| Comp Ex 2 | Li-P-S-I-Br | 4.76 | 4.69 | 1.0 |

**[Table 2]**

| | Sulfide solid electrolyte in negative electrode mixture | Lithium-ion conductor in negative electrode mixture | Capacity retention rate (after 50 cycles) |
|---|---|---|---|
| App Ex 1 | Li-P-S-I-Br | 80LiGaCl4-20LiGaI4 | 85% |
| App Comp Ex 1 | Li-P-S-I-Br | LiAlCl4 | 76% |
| App Comp Ex 2 | Li-P-S-I-Br | N/A | 79% |

The following can be understood from results shown in Tables 1 and 2 and FIG. 3.

As shown in Table 1, it can be understood that the lithium-ion conductors of Examples 1 to 13 gradually improve in ionic conductivity even at room temperature (25°C) when the pressurized state is maintained. Specifically, it is considered that the lithium-ion conductors of Examples 1 to 13 exhibit a "room-temperature sintering mechanism" in which the interface resistance disappears or decreases even at room temperature under pressure. Specifically, when the lithium-ion conductors of Examples 1 to 13 are pressurized to form pellet cells, room-temperature sintering occurs, the interface resistance gradually disappears, and the ionic conductivity increases. As shown in FIG. 3, when the pellet cells are ground and pressure-molded again to form pellet cells, the interface resistance disappears and the ionic conductivity increases in the same manner as before grinding. Specifically, it can be understood that the lithium-ion conductors of Examples 1 to 13 can repeatedly cause room-temperature sintering and disappearance of the interface resistance due to pressure. Furthermore, the lithium-ion conductors of Examples 1 to 13 are relatively soft and can adapt to the deformation of the surrounding materials. When such a lithium-ion conductor is applied in a lithium-ion battery, even if the active material expands and contracts during charging and discharging, causing cracks in the solid electrolyte, the lithium-ion conductor is thought to repeatedly repair the cracked interface. As a result, as shown in Table 2, the cycle characteristics of the battery are improved, whereby a high capacity can be maintained before and after the charge and discharge cycles. This effect was not confirmed in Comparative Examples 1 and 2, and it can be understood that this is a unique effect of the complex halide of Li and Ga.

In Examples 1 to 13 described above, the lithium-ion conductor containing a complex halide represented by LiGaX₄ (where X is one or more halogens) was applied to the negative electrode of a lithium-ion battery. However, the lithium-ion conductor is considered to have the desired effect whether it is included in the positive electrode, the electrolyte layer, or the negative electrode. In particular, by being including in the negative electrode, a greater effect can be expected. For example, when an alloy-based active material (Si, Si alloy, Sn, Sn alloy, etc., and in particular, Si) is used as the negative electrode active material, the negative electrode active material expands and contracts greatly during charging and discharging, whereby cracking and peeling are likely to occur in the negative electrode during charging and discharging. By including the lithium-ion conductor described above, the cracked interface is repaired by the lithium-ion conductor, whereby interruption of the ion conduction path is easily suppressed.

Furthermore, in Examples 1 to 13 described above, the lithium-ion conductor containing a complex halide represented by LiGaX₄ (where X is one or more halogens) was applied to an all-solid-state lithium-ion battery which contained substantially no liquid. However, the lithium-ion conductor can also be applied to a lithium-ion battery which contains a liquid. When the lithium-ion conductor is used together with a solid electrolyte, it is more likely to exhibit the effect of repairing cracking and peeling of the solid electrolyte. Specifically, the lithium-ion conductor can be expected to be more effective when applied to a battery which contains a solid electrolyte.

From the above results, the lithium-ion conductor containing the complex halide represented by LiGaX4 (X is one or more halogens) is deemed to be soft and have a property of increasing ion conductivity under pressure, and can cause a reaction similar to a sintering reaction even at a low temperature around room temperature. By including such a lithium-ion conductor in at least one of the electrode and the electrolyte layer of the lithium-ion battery, even if cracks occur in the electrodes or the electrolyte layer, the interface of the cracks can be repaired by the lithium-ion conductor, whereby interruption of the lithium-ion conduction path can be suppressed. Specifically, the lithium-ion battery containing this lithium-ion conductor is likely to maintain the charge/discharge characteristics even if cracks occur in the electrolyte layer or the electrodes.

### REFERENCE SIGNS LIST

- 10: positive electrode
- 11: positive electrode active material layer
- 12: positive electrode current collector
- 20: electrolyte layer
- 30: negative electrode
- 31: negative electrode active material layer
- 32: negative electrode current collector
- 100: lithium-ion battery

## Claims

1. A lithium-ion battery, comprising a positive electrode, an electrolyte layer, and a negative electrode, wherein
at least one of the positive electrode, the electrolyte layer, and the negative electrode contains a lithium-ion conductor and a sulfide solid electrolyte,
the lithium-ion conductor comprises a complex halide represented by LiGaX4, wherein X is halogens including Br and I, and
the pressure exerted on the lithium-ion conductor is 1 MPa or more and 100 MPa or less.

2. The lithium-ion battery according to claim 1, wherein
the complex halide comprises a first complex halide represented by LiGaXa4, whererin Xa is one of Br and I, and a second complex halide represented by LiGaXb4, wherein Xb is a halogen different from Xa and is one of Br and I, and
a molar ratio of the first complex halide to the second complex halide (first complex halide/second complex halide) is 1/4 or more and 4 or less.

## Patentansprüche

1. Lithiumionenbatterie umfassend eine Positivelektrode, eine Elektrolytschicht und eine Negativelektrode, wobei
mindestens eine von der Positivelektrode, der Elektrolytschicht und der Negativelektrode einen Lithiumionenleiter und einen Sulfid-Festelektrolyten enthält,
der Lithiumionenleiter ein komplexes Halogenid umfasst, dargestellt durch LiGaX4, wobei
X für Halogene einschließlich Br und I steht, und
der auf den Lithiumionenleiter ausgeübte Druck 1 MPa oder mehr und 100 MPa oder weniger beträgt.

2. Lithiumionenbatterie nach Anspruch 1, wobei
das komplexe Halogenid ein erstes komplexes Halogenid, dargestellt durch LiGaXa4, wobei
Xa eines von Br und I ist, und ein zweites komplexes Halogenid umfasst, dargestellt durch LiGaXb4, wobei
Xb ein Halogen ist, das sich von Xa unterscheidet und eines von Br und I ist, und
ein Molverhältnis des ersten komplexen Halogenids zu dem zweiten komplexen Halogenid (erstes komplexes Halogenid/zweites komplexes Halogenid) 1/4 oder mehr und 4 oder weniger beträgt.

## Revendications

1. Batterie lithium-ion, comprenant une électrode positive, une couche d'électrolyte et une électrode négative, dans laquelle
au moins un élément parmi l'électrode positive, la couche d'électrolyte et l'électrode négative contient un conducteur lithium-ion et un électrolyte solide à base de sulfure,
le conducteur lithium-ion comprend un halogénure complexe représenté par LiGaX4, dans lequel
X représente les halogènes, notamment Br et I, et
la pression exercée sur le conducteur lithium-ion est supérieure ou égale à 1 MPa et inférieure ou égale à 100 MPa.

2. Batterie lithium-ion selon la revendication 1, dans laquelle
l'halogénure complexe comprend un premier halogénure complexe représenté par LiGaXa4, dans lequel
Xa est soit Br, soit I, et un deuxième halogénure complexe représenté par LiGaXb4, dans lequel
Xb est un halogène différent de Xa et est soit Br, soit I, et
un rapport molaire entre le premier halogénure complexe et le deuxième halogénure complexe (premier halogénure complexe/deuxième halogénure complexe) est supérieur ou égal à 1/4 et inférieur ou égal à 4.
